**Europäisches Patentamt**

**European Patent Office**

**Office européen des brevets**

(19)

(11) Veröffentlichungsnummer: **0 142 818**
**B1**

(12) # EUROPÄISCHE PATENTSCHRIFT

(45) Veröffentlichungstag der Patentschrift:
27.04.88

(51) Int. Cl.⁴: **F 02 D 11/10, B 60 K 26/04**

(21) Anmeldenummer: **84113724.3**

(22) Anmeldetag: **14.11.84**

(54) Verfahren zum Betrieb einer Brennkraftmaschine in einem Vollastbereich.

(30) Priorität: **18.11.83 DE 3341720**

(43) Veröffentlichungstag der Anmeldung:
**29.05.85 Patentblatt 85/22**

(45) Bekanntmachung des Hinweises auf die Patenterteilung:
**27.04.88 Patentblatt 88/17**

(84) Benannte Vertragsstaaten:
**DE FR GB IT SE**

(56) Entgegenhaltungen:
EP-A-0 062 151
EP-A-0 072 395
DE-A-2 751 125
DE-A-3 135 479

**MTZ MOTORTECHNISCHE ZEITSCHRIFT, Band 41, Nr. 5, 1980, Seiten 203-216; I. GORILLE: "Motronic - ein neues elektronisches System zur Steuerung von Ottomotoren"**

(73) Patentinhaber: **BAYERISCHE MOTOREN WERKE Aktiengesellschaft, Postfach 40 02 40, D-8000 München 40 (DE)**

(72) Erfinder: **Fischer, Gregor, Dipl.- Ing., Neptunweg 19, D-8011 Aschheim (DE)**

(74) Vertreter: **Bullwein, Fritz, Bayerische Motoren Werke Aktiengesellschaft Postfach 40 02 40 Petuelring 130 AJ- 33, D-8000 München 40 (DE)**

EP 0 142 818 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Verfahren zum Betrieb einer Brennkraftmaschine in einem Vollastbereich.

Die Erfindung bezieht sich auf ein Verfahren nach dem Oberbegriff des Patentanspruchs 1.

Es ist bekannt, den Übergang zwischen dem oberen Teillastbereich und dem Vollastbereich bei maximal geöffneter Drosseleinrichtung und der Endstellung des Beschleunigungshebels durch Vergrößerung der zugeführten Kraftstoffmenge vorzunehmen. Um die sich dabei ergebende in der Regel abrupte Beschleunigung des Kraftfahrzeugs zu vermindern und damit einen relativ gleitenden Übergang zu schaffen, ist es weiter bekannt, die im Vollastbereich zugeführte Kraftstoffmenge drehzahl- und lastabhängig zu steuern (vgl. MTZ Motortechnische Zeitschrift 41 (1980) 5, Seite 203 ff).

Der Erfindung liegt die Aufgabe zugrunde, das Verfahren der eingangs genannten Art dahingehend zu verbessern, daß der Übergang zwischen dem oberen Teillast- und dem Vollastbereich in beiden Richtungen sanft erfolgt.

Die Erfindung löst diese Aufgabe durch die kennzeichnenden Merkmale des Patentanspruchs 1.

Die Erfindung beruht auf der Überlegung, den Leistungssprung, der durch die Gemischanreicherung in Form der Vergrößerung der zugeführten Kraftstoffmenge zu Beginn des Vollastbereichs hervorgerufen wird, durch eine entsprechende Verringerung der Füllung, d. h. der zugeführten Luftmenge, zumindest weitgehend zu kompensieren. Umgekehrt wird beim Übergang in den oberen Teillastbereich aus dem Vollastbereich heraus die entsprechende Maßnahme in Form einer Vergrößerung der Füllung bei gleichzeitiger Verringerung der Gemischanreicherung vorgenommen. Dies hat einen gleitenden Übergang zwischen den beiden interessierenden Bereichen zur Folge. Gleichzeitig bedeutet dies, daß die Brennkraftmaschine im Teillastbereich bis hin zum Vollastbereich mit relativ geringem Kraftstoffverbrauch betrieben werden kann.

Die Steuerung der Drosseleinrichtung im Vollastbereich kann auf unterschiedliche Weise vorgenommen werden. So ist es möglich, die Drosseleinrichtung bei einem unverändert in der Endlage bleibenden Beschleunigungshebel von der rückgestellten Stellung aus kontinuierlich bis zu ihrer maximalen Öffnungsstellung zu verändern. Diese von der Bewegung des Beschleunigungshebels entkoppelte Bewegung der Drosseleinrichtung kann beispielsweise nach einer Zeitfunktion erfolgen. Demgegenüber ergibt sich eine erhebliche Verbesserung mit Hilfe eines Beschleunigungshebels, der auch im Vollastbereich verstellbar ist und dessen Stellweg sich an den Stellweg zum Durchfahren des Teillastbereichs unmittelbar anschließt. Verbunden mit dem gleitenden Übergang zwischen Teillast- und Vollastbereich ist dann das Erreichen bzw. Verlassen des Vollastbereichs für den Fahrer nicht mehr erkennbar. Er hat subjektiv das Gefühl, als würde sein Betriebswunsch mit Hilfe des Beschleunigungshebels direkt auf die Brennkraftmaschine einwirken und er könne selbst den Vollastbereich dosiert gesteuert durchfahren.

Die zuletzt beschriebene Maßnahme kann noch dadurch verbessert werden, daß die Drosseleinrichtung unmittelbar vor Beginn und am Ende des Vollastbereichs jeweils die maximale Öffnungsstellung besitzt. Während ersteres bei der bekannten Vollast-Anreicherung üblich ist, ergibt sich durch die maximale Öffnungsstellung auch am Ende des Vollastbereichs eine optimale Dosierung des Gemischs über den gesamten Vollastbereich hinweg.

Weitere Verfeinerungen des erfindungsgemäßen Verfahrens lassen sich durch variable Wahl des Rückstellwinkels der Drosseleinrichtung abhängig von der Drehzahl der Brennkraftmaschine und von der Stellung der Drosseleinrichtung selbst zu Beginn des Vollastbereichs erzielen. Ersteres bietet gegenüber einer starren Wahl des Rückstellwinkels unabhängig von der Drehzahl der Brennkraftmaschine den Vorteil, daß der Übergang zwischen Teillast- und Vollastbereich unabhängig von dem jeweils vorliegenden Betriebspunkt stets in gleicher Weise gleitend erfolgt. Die zweite Maßnahme dient dazu, die unterschiedlichen Ausgestaltungen der sich an die Brennkraftmaschine anschließenden Antriebseinheiten zu berücksichtigen.

In der Zeichnung ist ein Ausführungsbeispiel der Erfindung dargestellt. Es zeigt

Fig. 1 den prinzipiellen Zusammenhang zwischen den Stellungen von Beschleunigungshebel und Drosseleinrichtung für das erfindungsgemäße Verfahren,

Fig. 2 das Blockschaltbild einer Ausführungsform der Erfindung und

Fig. 3 eine Alternative zu Fig. 2 und

Fig. 4 ein weiteres Diagramm zur Erklärung des funktionellen Zusammenhangs zwischen Leistung der Brennkraftmaschine, Füllung und dem Verhältnis von zugeführtem Kraftstoff und zugeführter Luft.

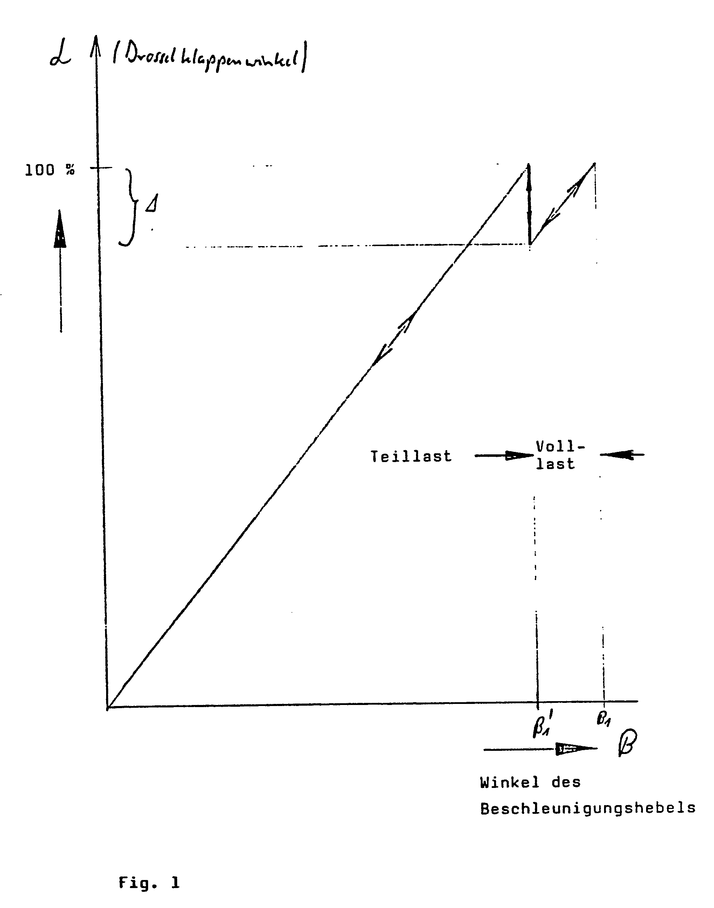

Anhand des in Fig. 1 gezeigten Zusammenhangs zwischen der Stellung eines Beschleunigungshebels und einer Drosseleinrichtung läßt sich das Prinzip der Erfindung erkennen. Als Beschleunigungshebel dient dabei ein willkürlich betätigbares Gaspedal, während die Drosseleinrichtung beispielsweise in Form einer Drosselklappe vorliegt. Die Stellung der beiden Elemente Beschleunigungshebel und Drosseleinrichtung ist als Funktion des maximalen Öffnungswinkels, der jeweils mit 100 % bezeichnet ist, wiedergegeben. Wie zu erkennen, besteht in einem ersten, mit Teillast bezeichneten Bereich ein direkter hier sogar linearer Zusammenhang zwischen der Stellung des Beschleunigungshebels und der Drosseleinrichtung. Am Ende des Teillastbereichs, bei dem der Beschleunigungshebel einen Winkel von $\beta'_1$ besitzt, ist die Drosseleinrichtung vollständig geöffnet.

An dem Teillastbereich schließt sich ein mit Vollast bezeichneter Bereich an, zu dessen Beginn die Drosseleinrichtung in ihrer Stellung um einen definierten Wert $\Delta$ zurückgenommen wird. Innerhalb des Vollastbereichs wiederum besteht erneut ein direkter Zusammenhang zwischen der Stellung des Beschleunigungshebels und der der Drosseleinrichtung. Am Ende des Stellwegs des Beschleunigungshebels (100 %) ist die Drosseleinrichtung erneut vollständig geöffnet. Damit läßt sich, wie weiter unten erläutert, der Übergang zwischen Teillast- und Vollastbereich ohne störenden Einsatzruck sanft ausführen. Dies gilt auch umgekehrt beim Übergang von Vollast zur Teillast, bei dem die Drosseleinrichtung von einer Stellung, die sich gegenüber der maximalen Öffnung um den Winkel $\Delta$ unterscheidet, vollständig geöffnet wird. Auch dadurch wird der entsprechende, üblicherweise auftretende Aussetzruck vermieden und der Übergang zwischen Vollast und Teillast ebenfalls sanft und praktisch unmerklich durchgeführt. Gleichzeitig läßt sich, wie ebenfalls weiter unten erläutert wird, der gesamte Teillastbereich verbrauchsgünstig durchfahren, da der gleitende Übergang zwischen Teillast und Vollast ohne Gemischanreicherung im oberen Teillastbereich, d. h. nahe der Vollast, erzielbar ist.

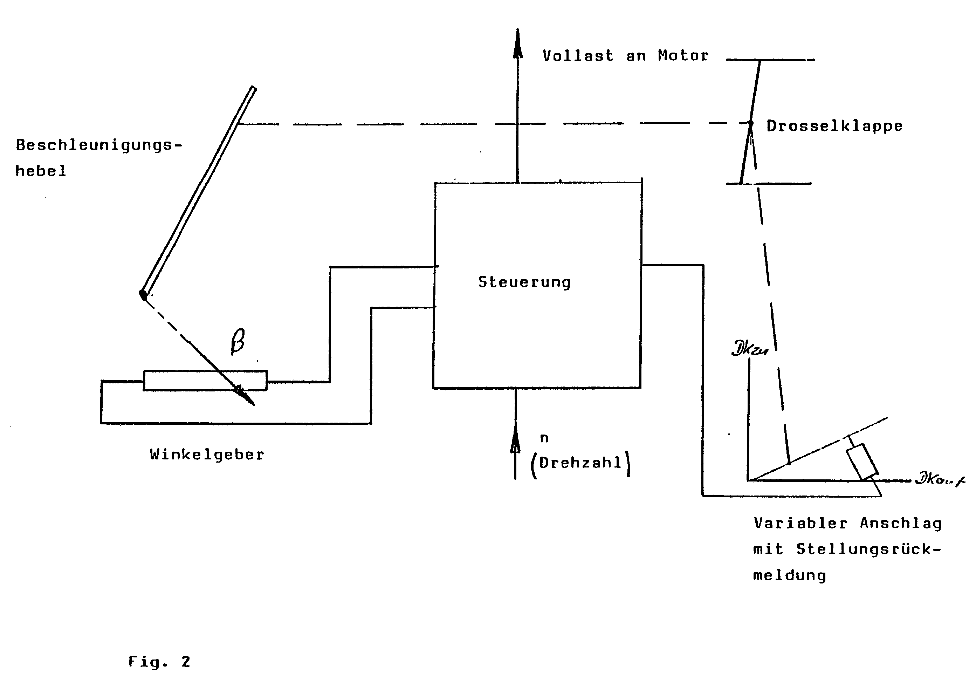

Die in Fig. 2 gezeigte mechanische Realisierung des Drosselklappensprungs zwischen Teillast und Vollast, d. h. die Zurücknahme bzw. Vorstellung der Drosseleinrichtung um den Winkel $\Delta$ kann mit Hilfe eines variablen Anschlags der Drosselklappe selbst bzw. eines in der Verbindung zwischen dem Gaspedal und der Drosselklappe liegenden Zwischenglieds realisiert werden. Für letzteres ist beispielsweise eine variabler Anschlag vorgeschlagen, mit dessen Hilfe die Drosseleinrichtung im Bereich des Winkels $\Delta$ eingestellt werden kann.

Hierzu wird der variable Anschlag bei Übergang von Teillast auf Vollast wirksam und stellt das Zwischenteil um einen dem Winkel $\Delta$ der Drosseleinrichtung entsprechenden Weg zurück. Bei weiterer Vergrößerung des Winkels $\beta$ des Beschleunigungshebels wird der variable Anschlag dann allmählich unwirksam, so daß die Drosseleinrichtung erneut auf den vollen Öffnungswinkel eingestellt werden kann.

Die Steuerung des variablen Anschlags in Abhängigkeit von der Stellung des Beschleunigungshebels erfolgt mit Hilfe einer elektronischen Steuerung, deren Eingangssignale der Stellung des Beschleunigungshebels und die Drehzahl n der Brennkraftmaschine sind. Die Stellung des Beschleunigungshebels kann beispielsweise mit Hilfe eines am Gaspedal angeordneten Drehpotentiometer erfaßt werden, der eine dem Drehwinkel $\beta$ entsprechende Spannung abgibt. Aus dem Wert $\beta$ ermittelt die Steuerung den Übergang zwischen Teillast und Vollast und gibt dabei ein übliches Vollastsignal an den Motor mit der Folge einer Gemischanreicherung im Vollastbereich in bekannter Form, beispielsweise drehzahlabhängig. Gleichzeitig bestimmt sie aus den Werten von und n mit Hilfe eines eingespeicherten Kennfeldes den für den erfindungsgemäßen gleitenden Übergang von Teillast auf Vollast bzw. umgekehrt erforderlichen Winkel $\Delta$, um den die Drosseleinrichtung jeweils zurückgenommen wird bzw. der beim Übergang von Vollast auf Teillast an der Sprungstelle eingestellt wird. Damit ergibt sich ein sanfter und gleichmäßiger Übergang an dieser Stelle.

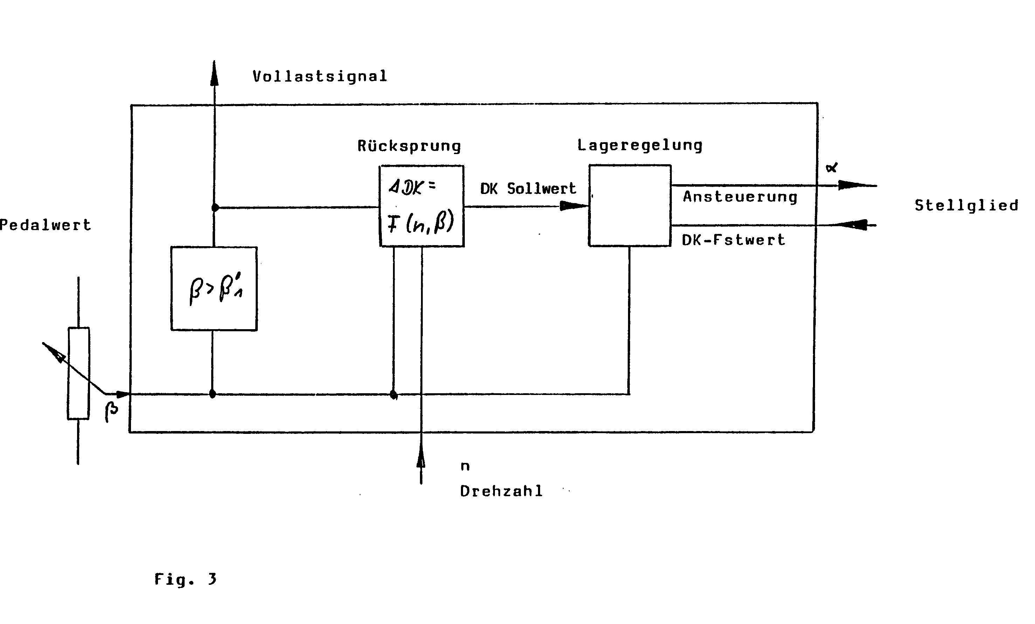

Die in Fig. 3 gezeigte Alternative zum Ausführungsbeispiel von Fig. 2 besteht im wesentlichen in einer direkten Steuerung der Drosseleinrichtung über den gesamten Lastbereich der Brennkraftmaschine hinweg. Hierzu ist einem elektronischen Steuergerät, dessen Eingangsgrößen wiederum die Werte von $\beta$ und n sind, ein Schwellwertschalter, ein Kennfeld und eine Servosteuerung enthalten. Der Schwellwertschalter ändert bei einem Wert des Winkels $\beta$, der gleich dem Winkel $\beta'_1$ (vgl. Fig. 1) ist, sein Ausgangssignal und liefert dann ein Schaltsignal an den Kennfeldspeicher und an die Brennkraftmaschine. Durch dieses Schaltsignal wird der zu den jeweiligen Werten von n und $\beta$ gehörende Wert der im Speicher enthaltenen Werte für den Winkel $\Delta$, d. h. für den Rücksprung bzw. Vorsprung der Drosseleinrichtung, ausgewählt. Das Signal für die Brennkraftmaschine entspricht dem bereits beschriebenen Vollastsignal und führt zur üblichen Gemischanreicherung im Vollastbereich.

Der mit Hilfe des Kennfeldspeichers ermittelte jeweilige Wert des Winkels $\Delta$ geht in die Servosteuerung ein. Liegt dieser Wert vor, d.h. befindet sich die Brennkraftmaschine zu Beginn des Vollastbereichs, so wird ein nicht mehr dargestelltes Stellglied für die Drosseleinrichtung so angesteuert, daß sie die Drosseleinrichtung um diesen Winkel zurücknimmt. Gleichzeitig wird die Ansteuerung dieses Stellglieds geändert. Während sie im Teillastbereich durch einen direkten, beispielsweise proportionalen Zusammenhang zwischen den Winkeln $\alpha$ (für die Drosseleinrichtung) und $\beta$ (für das Gaspedal) gekennzeichnet ist, liegt im Vollastbereich ein entsprechender Zusammenhang für die Summe $\alpha + \Delta$ und dem Winkel $\beta$ vor. Auch hier läßt sich der gewünschte gleitende Übergang zwischen Teillast und Vollast und umgekehrt mit geringem Aufwand erreichen.

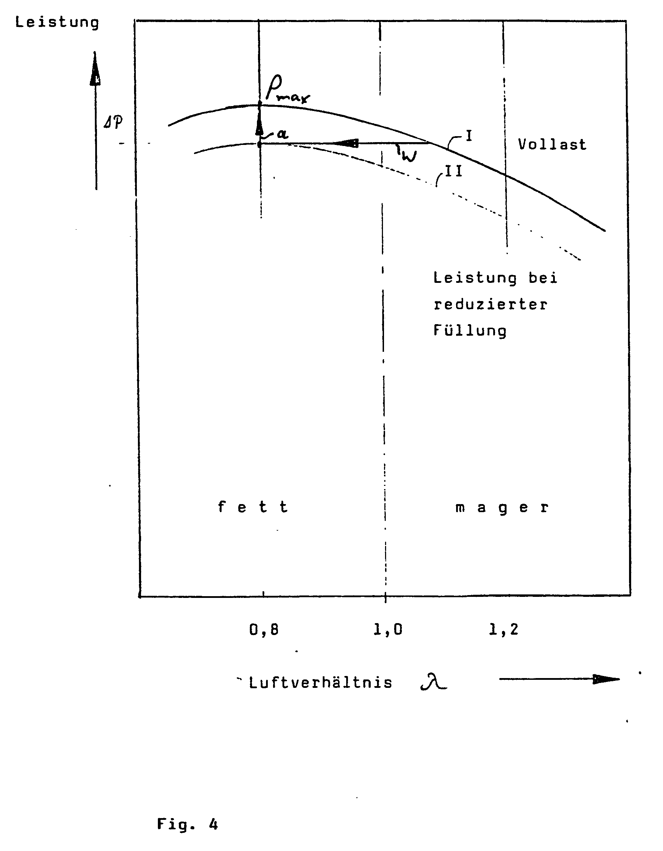

Das in Fig. 4 gezeigte Diagramm zeigt schematisch den Übergang von der Teillast zur Vollast. Der Betrieb der Brennkraftmaschine erfolge zunächst in der Teillast längs einer Kurve I entsprechend der vorliegenden Füllung. Bei Übergang zur Vollast soll unter Verringerung der Füllung und Erhöhung der Kraftstoffmenge, d.h. einer Verringerung des Luftverhältnisses λ die Leistung beibehalten werden. Dies ist durch die Verlagerung des Betriebspunktes auf eine Kurve II (kleinere Füllung) längs einer waagrechten Linie w dargestellt. Von diesem Betriebspunkt aus erfolgt bei weiterem Vollastbetrieb eine Erhöhung der Leistung durch Erhöhen der Füllung und der Kraftstoffmenge bei gleichbleibendem Luftverhältnis λ (Linie a). Damit wird ohne Leistungssprung ein Betriebspunkt Pmax maximaler Leistung erreicht.

Bei Durchfahren des Übergangs von Vollast zur Teillast treten qualitativ die umgekehrten Verhältnisse auf. Sie sind der Übersichtlichkeit halber in der Figur nicht dargestellt.

## Patentansprüche

1. Verfahren zum Betrieb einer Brennkraftmaschine von Kraftfahrzeugen in einem Vollastbereich, mit einer durch einen Beschleunigungshebel stellbaren Drosseleinrichtung für die zugeführte Luftmenge und bei einer vorgegebenen Stellung dieses Hebels zuschaltbaren Mitteln zur Vergrößerung der zugeführten Kraftstoffmenge, dadurch gekennzeichnet, daß die Drosseleinrichtung zu Beginn des Vollastbereichs um einen definierten Wert zurückgestellt wird und im weitern Verlauf dieses Bereichs erneut vollständig geöffnet wird und daß umgekehrt beim Verlassen des Vollastbereichs durch Veränderung der Einstellung der Drosseleinrichtung im Öffnungssinne von einer nicht vollständig geöffneten Einstellung aus eine Vergrößerung der Füllung vorgenommen wird.

2. Verfahren nach Anspruch 1, dadurch gekennzeichnet, daß sich an den Bewegungsbereich des Beschleunigungshebels für den Teillastbereich der Brennkraftmaschine ein weiterer Bewegungsbereich unmittelbar anschließt, in dem die Bewegung des Beschleunigungshebels und der Drosseleinrichtung innerhalb des Vollastbereichs erfolgt.

3. Verfahren nach Anspruch 2, dadurch gekennzeichnet, daß die Drosseleinrichtung unmittelbar vor Beginn und am Ende des Vollastbereichs jeweils die maximale Öffnungsstellung besitzt.

4. Verfahren nach einem der Ansprüche 1 bis 3, dadurch gekennzeichnet, daß die Rückstellung der Drosseleinrichtung beim Übergang von Teillast auf Vollast abhängig von der Drehzahl der Brennkraftmaschine ist.

5. Verfahren nach einem der Ansprüche 1 bis 4, dadurch gekennzeichnet, daß die Rückstellung der Drosseleinrichtung abhängig von deren Stellung zu Beginn des Vollastbereichs ist.

## Revendications

1. Procédé pour exploiter un moteur à combustion interne de véhicules automobiles dans un domaine de pleine charge, avec un dispositif d'étranglement, susceptible d'être réglé par un levier d'accélération, pour la quantité d'air alimentée, et avec des moyens, susceptibles d'être connectés pour une position prédéfinie de ce levier, pour permettre d'augmenter la quantité de carburant alimentée, procédé caractérisé en ce que le dispositif d'étranglement est repositionné en arrière d'une valeur définie au début du domaine de pleine charge, et est ouvert à nouveau complètement lorsque ce domaine continue à être parcouru, tandis qu'inversement, lors de l'abandon du domaine de pleine charge, du fait de la modification du positionnement du dispositif d'étranglement dans le sens de l'ouverture, à partir d'un positionnement non complètement ouvert, une augmentation du remplissage est effectuée.

2. Procédé selon la revendication 1, caractérisé en ce que, à l'étendue de déplacement du levier d'accélération pour le domaine de charge partielle du moteur à combustion interne, se raccorde directement une autre étendue de déplacement dans laquelle le déplacement du levier d'accélération et du dispositif d'étranglement s'effectue à l'intérieur du domaine de pleine charge.

3. Procédé selon la revendication 2, caractérisé en ce que le dispositif d'étranglement occupe la position d'ouverture maximale d'une part, immédiatement avant le début du domaine de pleine charge, et, d'autre part, à la fin de ce domaine.

4. Procédé selon une des revendications 1 à 3, caractérisé en ce que le positionnement en retour du dispositif d'étranglement lors du passage de la charge partielle à la pleine charge, dépend de la vitesse de rotation du moteur à combustion interne.

5. Procédé selon une des revendications 1 à 4, caractérisé en ce que le positionnement en retour du dispositif d'étranglement dépend de sa position au début du domaine de pleine charge.

## Claims

1. A method for the operation of an internal combustion engine of motor vehicles in a full load range, the engine having a throttle device, adjustable by an acceleration lever, for the supplied quantity of air, and means adapted to be connected in a given position of this lever to increase the supplied quantity of fuel, characterised in that the throttle device is re-set by a defined value at the beginning of the full load range and, in the further course of this range, is opened again completely, and that, vice versa, on leaving the full load range, an increase in filling is carried out by altering the setting of the throttle device in the opening direction from a setting which is not completely opened.

2. A method according to Claim 1, characterised in that a further range of movement joins immediately on to the range of movement of the acceleration lever for the partial load range of the internal combustion engine, in which further range of movement of the acceleration lever and of the throttle device takes place within the full load range.

3. A method according to Claim 2, characterised in that the throttle device has the maximum opening position immediately before beginning and at the end of the full load range.

4. A method according to any one of Claims 1 to 3, characterised in that the re-setting of the throttle device on transition from partial load to full load is dependent on the rotational speed of the internal combustion engine.

5. A method according to any one of Claims 1 to 4, characterised in that the re-setting of the throttle device is dependent on its position at the beginning of the full load range.

Fig. 1

Fig. 2

Fig. 3

Fig. 4